(19) **Europäisches Patentamt / European Patent Office / Office européen des brevets**

(11) **EP 4 325 396 A1**

(12) # EUROPEAN PATENT APPLICATION

(43) Date of publication:
**21.02.2024 Bulletin 2024/08**

(21) Application number: **23190301.4**

(22) Date of filing: **08.08.2023**

(51) International Patent Classification (IPC):
**G06N 3/045** (2023.01)     **G06N 3/096** (2023.01)
**G06N 3/09** (2023.01)     **G06N 20/10** (2019.01)
**G06N 20/20** (2019.01)

(52) Cooperative Patent Classification (CPC):
**G06N 3/045; G06N 3/096;** G06N 3/09; G06N 20/10;
G06N 20/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 US 202263397685 P
22.11.2022 US 202217992334**

(71) Applicant: **SAP SE
69190 Walldorf (DE)**

(72) Inventors:
• **CHAKRABORTY, Tanmay
69190 Walldorf (DE)**
• **SANTANA DE OLIVEIRA, Anderson
69190 Walldorf (DE)**
• **MALLAT, Khawla
69190 Walldorf (DE)**
• **KAPLAN, Caelin
69190 Walldorf (DE)**

(74) Representative: **Müller-Boré & Partner
Patentanwälte PartG mbB
Friedenheimer Brücke 21
80639 München (DE)**

(54) **MACHINE LEARNING MODEL TRAINING WITH PRIVACY AND EXPLAINABILITY**

(57)     Various examples are directed to systems and methods for training a machine learning model. A computing system may access a bias-cleared model trained according to at least one fairness constraint. The computing system may execute at least a first training epoch for a bias-cleared private model. Executing the first training epoch may comprise applying an explainer model to first bias-cleared private model output data to generate first bias-cleared private model explanation data. Executing the first training epoch may also comprise accessing first bias-cleared model explanation data describing first bias-cleared model output data generated by the bias-cleared model and determining a first explanation loss using the first bias-cleared private model explanation data and the first bias-cleared model explanation data. Executing the first training epoch may further comprises determining first noise data to be added to the bias-cleared private model based at least in part on a privacy budget.

**Description**

CROSS-REFERENCE TO RELATED APPLICATIONS

This application claims the benefit of U.S. Provisional Application No. 63/397,685, filed August 12, 2022, entitled "MACHINE LEARNING MODEL TRAINING WITH PRIVACY AND EXPLAINABILITY," which is incorporated herein by reference in its entirety.

BACKGROUND

Machine learning models are used in a number of contexts that can influence the lives of individuals such as, for example, finance, health care, hiring and human resources, and the like. In the finance sector, machine learning models can be used, for example, to evaluate loan applications. In the health-care sector, machine learning models can be used, for example, to perform diagnoses on patients. In the human resources sector, machine learning models can be used to evaluate applicants for open positions.

BRIEF DESCRIPTION OF THE DRAWINGS

FIG. 1 is a diagram showing one example of an environment for training a bias-cleared private model.
FIG. 2 is a diagram showing one example of an arrangement for training a bias-cleared private model.
FIG. 3 is a flowchart showing one example of a process flow that may be executed in the environment of FIG. 1 to generate the bias-cleared private model.
FIG. 4 is a flowchart showing one example of a process flow that may be executed to train a bias-cleared private model.
FIG. 5 is a flowchart showing another example of a process flow that may be executed to train a bias-cleared private model.
FIG. 6 is a block diagram showing one example of a software architecture for a computing device.
FIG. 7 is a block diagram of a machine in the example form of a computer system within which instructions may be executed for causing the machine to perform any one or more of the methodologies discussed herein.

DETAILED DESCRIPTION

Machine learning models can be executed by computing system to greatly expand the capabilities of the computing systems in the field in which they are used. For example, a computing system executing a trained machine learning model may be capable of recognizing patterns in loan applications that would not only be undetectable to a human user but would also be undetectable to computing systems programmed using different techniques. As another example, a computing system executing a trained machine learning model may be more effective in generating diagnoses than computing systems programmed using different techniques.

Programming a computing system to execute a trained machine learning model can make that computing system more effective, and sometimes significantly more effective, than computing systems trained using other techniques. At the same time, however, programming a computing system to execute a trained machine learning model can also introduce disadvantages.

One disadvantage that can be associated with machine learning models is a lack of explainability. For example, due to complexity and/or structure, many common forms of machine learning models behave as black boxes. That is, computing systems programmed with certain machine learning models may provide accurate output corresponding to their input, but may not do so in a way that is intelligible to a human user. Consider an example machine learning model arranged to include a neural network structure. The neural network structure may have hundreds, thousands, or more nodes and associated weights spread over many different layers. The values of the weights at the different nodes and layers may not be intelligible to a human user observing the way that the neural network is programmed.

Lack of explainability can cause several problems for computing systems programmed to execute machine learning models. For example, a lack of explainability may make it more difficult for a developer to evaluate the performance of a machine learning model. For example, if a developer is not able to understand the reasons why a machine learning model is producing a particular result, it may be more difficult for that developer to modify the machine learning model to improve its result. Another problem arises when computing systems programmed with machine learning models are used to make decisions that affect the lives of individuals. For example, if a machine learning model is behaving as a black box, a human user may not be able to easily evaluate whether that machine learning model has been trained to base its output on sensitive input parameters such as, for example, protected characteristics such as race, sex, and/or the like.

Another disadvantage associated with the use of trained machine learning models is related to privacy. A machine learning model is trained using training data. To generate an accurate model, it is often desirable to use training data describing real individuals. Machine learning models, however, may be vulnerable to attacks that can reveal details of the training data used to train the model. For example, a trained machine learning model may be vulnerable to membership inference attacks. In a membership inference attack, an attacker exploits a trained machine learning model to extract information about the training data used to train the machine learning model. When the training data includes potentially private data about real individuals, a membership inference attack may reveal the private training data.

Computing systems programmed to execute machine learning models can use various techniques to minimize the challenges associated with lack of explainability and privacy concerns. For example, a computing system may train an explainability model, or use another suitable technique, to generate explanation data describing a machine learning model. The explanation data can be used, for example, to inform developers about how the machine learning model is operating. In some examples, explanation data can also be used during the training of a machine learning model, for example, to program the machine learning model to minimize and/or avoid reliance on sensitive input parameters.

In some examples, challenges related to privacy can also be addressed. For example, a differential privacy mechanism may be applied during the training of a machine learning model. The differential privacy mechanism may obscure data, such as sensitive training data, and thereby protect the privacy of the data. According to differential privacy mechanisms, random noise is added to training data, and/or to other factors considered during the training of the machine learning model. In some arrangements of machine learning models, random noise is added to the gradients of the machine learning model during different training epochs. The added noise may obscure the training data used to train the machine learning model, making membership inference attacks more difficult.

When using a computing system programmed to execute a machine learning model, it may be desirable to mitigate both privacy risks and explainability risks. In some examples, however, techniques for mitigating privacy risks, such as differential privacy, may work at cross purposes with techniques for mitigating explainability risks, such as the use of explainability models. For example, a machine learning model trained to avoid relying on sensitive input parameters may become more susceptible to membership inference attacks, including membership inference attacks directed to the data of individuals in the subgroup described by the sensitive input parameters. As a result, a developer programming a computing system to use a machine learning model may have to make trade-offs between privacy and explainability.

Various examples address these and other challenges by providing systems and methods for training a machine learning model to achieve differential privacy and explainability while minimizing trade-offs. For example, a bias-cleared model may be trained. The bias-cleared model may be a machine learning model trained using an explainer model to conform the bias-cleared model to one or more fairness constraints. For example, the bias-cleared model may be configured to avoid relying on sensitive input parameters. The bias-cleared model may not be trained using differential privacy techniques. Accordingly, the bias-cleared machine learning model may mitigate explain ability risks, but may not have significant robustness against membership inference attacks.

The bias-cleared model and explainer model may be used to train a bias-cleared private model. In some examples, the bias-cleared private model may have the same structure or a similar structure to that of the bias-cleared model. For example, when the bias-cleared model is a neural network having a first structure (e.g., a number of hidden layers, a number of nodes per layer, etc.), the bias-cleared private model may also have the first structure. During training, the explainer model is used to generate bias-cleared private model explanation data based on an output of the bias-cleared private model in response to training data. The bias-cleared private model explanation data may be compared to bias-cleared model explanation data describing the bias-cleared model. The bias-cleared model explanation data may be generated by the explainer model, as described herein. The comparing of the bias-cleared model explanation data and the bias-cleared private model explanation data may result in explanation loss data describing a difference between the input parameters relied on by the bias-cleared model and the input parameters relied on by the bias-cleared private model. The bias-cleared private model may be modified during training to minimize the explanation loss thus causing the bias-cleared private model to behave similarly to the bias-cleared model.

During the training, the bias-cleared private model may also be modified to add noise to implement differential privacy. For example, during each training epoch, the bias-cleared private model may be modified based on an explanation loss for the training epoch, noise data to implement differential privacy, and a utility loss for the training epoch. In some examples, the random noise is added to the gradients of the machine learning model, determined according to a Stochastic Gradient Descent (SGD) training technique. Multiple epochs may be executed resulting in a trained bias-cleared private model. The resulting bias-cleared private model may implement differential privacy, and therefore may be more robust against membership inference attacks. Because the bias-cleared private model is trained considering the corresponding bias-cleared model, the bias-cleared private model may also adhere to the fairness constraints from the bias-cleared model.

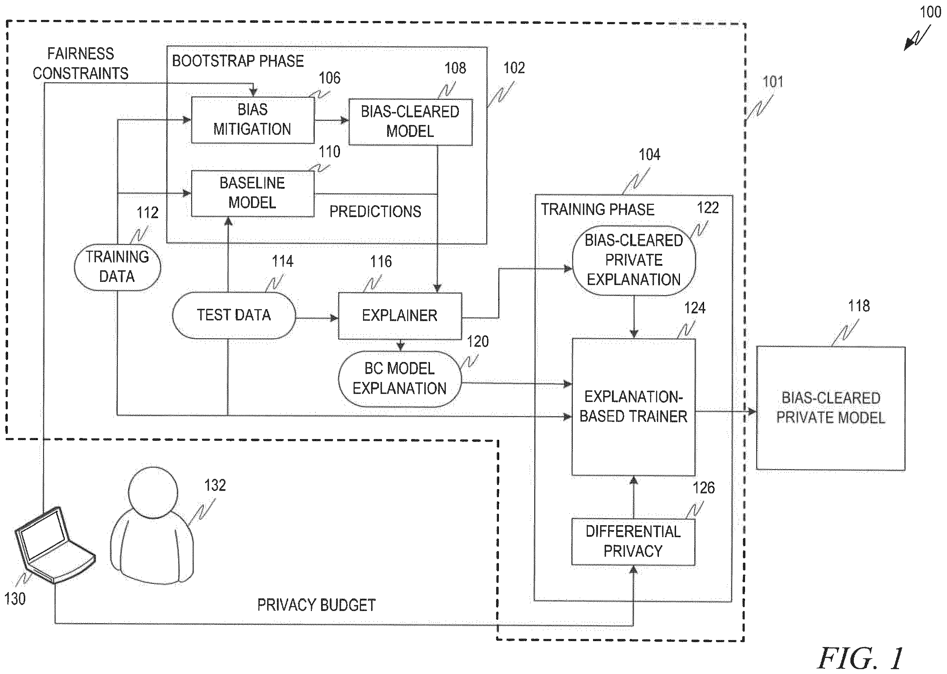

FIG. 1 is a diagram showing one example of an environment 100 for training a bias-cleared private model 118. The environment 100 comprises a computing system 101 that may be programmed to train the bias-cleared private model 118. The bias-cleared private model 118, once trained as described herein, may conform to a set of one or more fairness constraints related to explainability and may also exhibit properties of differential privacy. The bias-cleared private model 118 may be executed at the computing system 101 and/or may be provided to other computing systems to be executed at those computing systems.

The computing system 101 may be or include any suitable type of computing system or systems. In some examples, the computing system 101 is implemented in whole or in part in an on-premise arrangement. An on-premise arrangement may include one or more computing devices executing at a single facility. Also, in some examples the computing system 101 is implemented in whole or in part in a cloud environment. In a cloud environment, the computing system 101 may comprise multiple computing systems in a single geographic location and/or distributed across multiple geographic locations.

The computing system 101 may be in communication with one or more user computing devices associated with users, such as the user computing device 130 associated with user 132. The user computing device 130 may be any suitable computing device such as, for example, a laptop computer, a desktop computer, a tablet computer, a mobile computing device, and/or the like. The user 132 may utilize the computing device 130 to provide the computing system 101 with various parameters for training the bias-cleared private model 118. In the example of FIG. 1, the user 132 provides fairness constraint data and privacy budget data.

The computing system 101 may train the bias-cleared private model using a bootstrap phase 102 and a training phase 104. During the bootstrap phase 102, the computing system 101 may utilize a bias mitigation system 106 and an explainer model 116 to train the bias-cleared model 108. An output of the bootstrap phase 102 may be the trained bias-cleared model 108. The explainer model 116 may be a machine learning model trained to generate explanation data describing the bias-cleared model 108. The explainer model 116 may be structured and trained according to any suitable technique. In some examples, the explainer model 116 is arranged, in whole or in part, as a SHapely Additive explanations (SHAP) model. A SHAP model is a machine learning model that is trained to generate explanations for a subject machine learning model using Shapley values. Also, in some examples, the explainer model 116 is arranged, in whole or in part, as a Local Interpretable Model-Agnostic (LIME) model. A LIME model is a machine learning model that is generated from a subject machine learning model by perturbed being inputs to the subject machine learning model and observing corresponding outputs.

The bias-cleared model 108 may be any suitable machine learning model arranged according to any suitable machine learning model structure. In some examples, the bias-cleared model 108 is a classifier-type model arranged to include a neural network. It will be appreciated that, in various examples, the bias-cleared model 108 may be any suitable type of trainable model. In some examples, the bias-cleared model 108 is a suitable type of black box model, such as, for example, a partial least squares model, a Random Forest (RF) model, a Support Vector Regression (SVR) model, and/or the like. In some examples, the bias-cleared model 108 is a neural network having four hidden layers and having the structure indicated by TABLE 1 below:

TABLE 1:

| Layer | Unit |
|---|---|
| Input | input.shape() |
| hidden_1 | 500 |
| dropout | 0.2 |
| hidden_2 | 400 |
| dropout | 0.2 |
| hidden_3 | 300 |
| dropout | 0.2 |
| hidden_4 | 100 |
| Output | output.shape() |

During the bootstrap phase 102 the bias-cleared model 108 may be trained using any suitable technique. In some examples, the bias-cleared model 108 is trained using an SGD technique. The bias-cleared model 108 may trained using training data 112. The training data 112 may include a number of labeled samples. Each labeled sample from the training data 112 may include a number of input parameters values and a label indicating a desired model output for the input parameters values. Consider an example in which the bias-cleared model 108 is being trained to make a medical diagnosis. In this example, a labeled sample from the training data 112 may include a set of input parameters values describing a patient such as, a description of symptoms, vital signs, and/or the like. The labeled sample may be labeled with a desired diagnosis for the set of input parameters values. Consider another example in which the bias-cleared model 108 is being trained to select applicants for an employment position. In this example, a labeled sample from the training data may include a set of input parameter values describing a job applicant such as, education levels, schools attended, past positions, and/or the like. The labeled sample may be labeled with an indication of how suitable the job applicant is for the employment position.

According to an SGD technique, the bootstrap phase 102 may include executing a number of training epochs. In each training epoch, the bias-cleared model 108 may receive as input one or more batches of labeled samples from the training data 112 and generate corresponding outputs. The output of the bias-cleared model 108 may be compared to the labels for the respective samples of the training data 112. Based on the comparison, a utility loss may be determined. The utility loss may describe the difference between the actual output of the bias-cleared model 108 at the epoch and the desired output of the bias-cleared model 108 described by the labels associated with the training data 112. The utility loss may be used to determine changes to the bias-cleared model 108 for the epoch. For example, a gradient of the utility loss may be found. When the bias-cleared model 108 is a neural network, the changes may include changes to the coefficients of the various nodes of the neural network. The coefficients may be modified, for example, based on the gradient of the utility loss.

During the bootstrap phase 102, the bias mitigation system 106 may train the bias-cleared model 108 in accordance with fairness constraint data, which may be provided by the user 132. Fairness constraint data may describe constraints placed on a machine learning model, such as the bias-cleared model 108, to minimize and/or eliminate the reliance of the model on sensitive input parameters. In some examples, fairness constraint data may be provided as inputs to a bias mitigation system 106, as described herein. Fairness constraints may be provided, for example, to form the bias-cleared model 108 to avoid reliance on sensitive input parameters, such as input parameters describing protected classes of individuals. These may include input parameters that may tend to identify an individual by race, sex, religion, and/or the like.

The bias mitigation system 106 may be or include any suitable hardware and/or software components. The bias mitigation system 106 may participate in the training of the bias-cleared model 108 to implement the bias-cleared model 108 according to the fairness constraint data, which may be provided by the user 132. In some examples, the bias mitigation system 106 implements a grid search procedure. According to a grid search procedure, the bias mitigation system 106 provides the user 132 (e.g. via the user computing device 130) with different explanation data for the bias-cleared model 108 based on different hyperparameters of the bias-cleared model 108. The user 132 may select the hyperparameters corresponding to the more favorable explanation (e.g., the explanation that best balances model accuracy and fairness. In some examples, the bias mitigation system 106 may provide the user with one or more examples of potential bias-cleared models and use explanation data to describe a difference between the operation of the potential bias-cleared models and the baseline model 110, which is not bias cleared. The user 132 may select the potential bias-cleared model that best balances the use of sensitive input parameters and the accuracy of the model.

In some examples, a training epoch at the bootstrap phase 102 may include providing a single batch of training data 112 to the bias-cleared model 108. In other examples, a training epoch at the bootstrap phase 102 may include providing multiple batches of training data 112 to the bias-cleared model 108. For example, the computing system 101 may lack sufficient resources to process all of the training data 112 in a single batch. Accordingly, a single training epoch at the bootstrap phase 102 may include providing the training data 112 to the bias-cleared model 108 in multiple batches. When the training epoch includes providing the training data 112 into multiple batches, the results of the bias-cleared model 108 over the multiple batches may be aggregated to determine, for example, the utility loss, compliance with fairness constraint data, and resulting modifications to be made to the bias-cleared model 108 for the training epoch.

In some examples, the bootstrap phase 102 may also include training a baseline model 110 using the training data 112. The baseline model 110 may have a similar or identical structure to the bias-cleared model 108 and the bias-cleared private model 118. The baseline model 110, however, may be trained without regard to the fairness constraints. The baseline model 110 may be used, for example, to evaluate the bias-cleared model 108 and/or the bias-cleared private model 118. In some examples, test data 114 may be provided to the baseline model 110, the bias-cleared model 108, and to the bias-cleared private model 118. The performance of the baseline model 110 relative to the bias-cleared model 108 and the bias-cleared private model 118 may be used, for example, by the user 132 to adjust the training of the bias-cleared model 108 and/or the bias-cleared private model 118 to improve the performance.

The training phase 104 may be executed after the bootstrap phase 102. An explanation-based trainer system 124 may be arranged to execute the training phase 104. The explanation-based trainer system 124 may be implemented using any suitable combination of hardware and/or software. During the training phase 104, the explanation-based trainer system 124 trains the bias-cleared private model 118 using bias-cleared model explanation data 120 based on the bias-cleared model 108 and bias-cleared private explanation data 122 based on the bias-cleared private model 118. The explanation-based trainer system 124 may also communicate with a differential privacy system 126. Differential privacy system 126 may be implemented using any suitable combination of hardware and/or software. The differential privacy system 126 may generate noise to be added, for example, to the training data 112 and/or to gradients of the bias-cleared private model 118 during training epochs of the bias-cleared private model 118. The addition of the noise, in some examples, may make the bias-cleared private model 118 differentially private.

The training phase 104, like the bootstrap phase 102, may include a number of training epochs. For each training epoch, the explanation-based trainer system 124 may provide the bias-cleared private model 118 with one or more batches of labeled samples from the training data 112. The bias-cleared private model 118 may generate results based on the labeled samples. The explainer model 116 may be executed to generate a bias-cleared private explanation data 122 describing the bias-cleared private model 118 in view of its output for the training epoch. The explanation-based trainer system 124 may utilize the bias-cleared private explanation data 122 and a corresponding bias-cleared model explanation data 120 to generate an explanation loss. The explanation loss may describe a difference between the bias-cleared model explanation data 120 and the bias-cleared private explanation data 122.

Also for each training epoch, the differential privacy system 126 may generate noise to be added to the training data 112 and/or to gradients of the bias-cleared private model 118. For example, the explanation-based trainer system 124 and differential privacy system 126 may implement a Differential Privacy Stochastic Gradient Descent Technique (DP-SGD). According to DP-SGD, the differential privacy system 126 may add random noise to the gradients determined for each training epoch. This may cause the resulting bias-cleared private model 118 to behave slightly differently than it otherwise would so as to obscure or make it more difficult to determine whether any given data item was part of the training data set.

Various differential privacy techniques apply random noise according to a privacy budget. Consider the differential privacy condition given by Equation [1] below:

$$S \subseteq Range(M), \Pr[M(X_1) \in S] \leq \exp(\varepsilon) \times \Pr[M(X_2) \in S] + \delta \qquad [1]$$

In Equation [1], $M$ is a randomized function. $M$ is ($\varepsilon$, $\delta$)-differentially private if it meets the differential privacy condition given by Equation [1]. In Equation [1].

$X_1$ and $X_2$ are sets of observed data differing on, at most, one data item. $M(X_1)$ and $M(X_2)$ are the output of random noise applied to the observed data sets $X_1$ and $X_2$. $S$ is a value in the set of all possible outputs of $M$. The value $\delta$ is the probability of failure (for example, the probability that the difference between $X_1$ and $X_2$ is detectable).

The value $\varepsilon$ is the privacy parameter and may also be referred to as a privacy budget. For example, the privacy budget $\varepsilon$ may describe the maximum permissible difference between a query on the observed data and a query on the observed data adding or removing one entry. The privacy budget can also describe the amount of random noise that is added to data set $X_1$, such that it cannot be discerned from the observed data set adding or removing one entry $X_2$. A lower privacy budget (e.g., a smaller permissible difference between the observed data set $X_1$ and the observed data set adding or removing one entry $X_2$) implies a higher level of random noise added to the observed data set $X_1$.

As the privacy budget $\varepsilon$ decreases, the bias-cleared private model 118 becomes more private. For example, as the privacy budget $\varepsilon$ is reduced, the difference between the observed data $X_1$ and the obscured data after the application of random noise $M(X_1)$ increases. This makes the obscured data more private, but also decreases the accuracy of the resulting machine learning model to a computing system. For example, as differences between the observed data $X_1$ and the obscured data $M(X_1)$ increase, the accuracy and/or usefulness of a resulting machine learning model may also decrease.

ALGORITHM 1 below provides an example of how the explanation-based trainer system 124 may execute the training phase 104.

```
ALGORITHM 1:

INPUTS: TargetExplanation, weights, privacybudget, Xbatch, Ybatch
     for Epoch, Xbatch, Ybatch, do
          logits    ←model (Xbatch,weights)
          currentexp ←ComputeExplanations (model, Xbatch)
          currentexp ←Normalize(currentexp)
          lossu   ←lossfunction(logits, Ybatch)
          losse ← α * MAE (TargetExplanation, currentexp)
          weights ← UpdateWeights (lossu + losse, privacybudget)
```

As shown, ALGORITHM 1 includes inputs *TargetExplanation, weights, privacybudget,* and $X_{batch}$, $Y_{batch}$. *TargetExpla-*

*nation* indicates a target explanation, such as bias-cleared model explanation data 120 generated by the explainer model 116 and based on outputs of the bias-cleared model 108. The value *weights* may indicate weights for the bias-cleared private model 118. For example, when the bias-cleared private model 118 is a neural network, the value *weights* may indicate the current weights assigned to each node of the neural network. The *privacybudget* used by the differential privacy system 126 to determine noise to be added to the bias-cleared private model 118. The values $X_{batch}$ and $Y_{batch}$ indicate a batch of training data 112. For example, $X_{batch}$ indicates the input parameter values associated with the various samples of a batch of the training data 112. $Y_{batch}$ indicates the labels associated with a batch of the various samples of the training data 112.

The ALGORITHM 1 executes a **for** loop, with one iteration of the loop for each training epoch. Any suitable number of training epochs may be executed. For each training epoch, the explanation-based trainer system 124 may determine an output of the bias-cleared private model 118 in view of the input parameter values $X_{batch}$ and the current weights of the bias-cleared private model 118 *weights*. In the example of ALGORITHM 1, the output of the bias-cleared private model 118 is stored to the variable called *logits*.

The explanation-based trainer system 124 may determine a utility loss and may also find bias-cleared private explanation data 122 based on the bias-cleared private model 118 and the input parameter values $X_{batch}$. For example, the explanation-based trainer system 124 may call the explainer model 116 to generate bias-cleared private explanation data 122 based on the output of the bias-cleared private model 118 for the training epoch. In the example of ALGORITHM 1, the bias-cleared private explanation values are stored to a variable called *current$_{exp}$*. In the example of ALGORITHM 1, the explanation-based trainer system 124 normalizes the bias-cleared private explanation data 122, storing result back to the variable *current$_{exp}$*. Normalizing the bias-cleared private explanation data 122 may involve, for example, scaling the bias-cleared private explanation data 122 between a defined range such as, for example, between zero and one. The bias-cleared model explanation data 120, in various examples, may be similarly normalized.

The explanation-based trainer system 124 may determine a utility loss *loss$_u$* by executing a loss function, for example, according to an SGD technique. The utility loss may be based on the outputs of the model for the epoch, indicated by *logits,* and the labels $Y_{batch}$.

The explanation-based trainer system 124 may also determine an explanation loss *loss$_e$*. The explanation loss is based on a difference between the bias-cleared private explanation data 122 and the bias-cleared model explanation data 120, indicated in ALGORITHM 1 by *TargetExplanation*. The explanation loss *loss,* may be based on a mean absolute error value (MAE) found between the bias-cleared private explanation data 122 and the bias-cleared model explanation data 120. In some examples, the MAE may be multiplied by a waiting factor given by $\alpha$. In some examples, the MAE of the explanation loss is determined according to Equation [2] below:

$$loss_e = \sum \frac{|e_c - e_{cm}|}{\max|e_c - e_{cm}|}$$

[2]

In the example of Equation [2], the MAE is the sum of the differences between the bias-cleared private explanation data 122 and the bias-cleared model explanation data 120 over a maximum difference summed over all samples of the training data 112, such as all of the samples of the training data 112 in a batch. If multiple batches of training data 112 are used in a training epoch, then the sum may be taken over all batches used for the training epoch. In some examples, the bias-cleared model explanation data 120 are determined based on the training data 112, and may be determined during the training epoch for training the bias-cleared private model 118. Also, in some examples, the bias-cleared model explanation data 120 is determined from test data 114 or other data different from the training data 112 used to train the bias-cleared private model 118. In these examples, the explanation-based trainer system 124 may select training data 112 for use with the bias-cleared private model 118 based on its correspondence to the test data 114 or other data used by the explainer model 116 to generate the bias-cleared model explanation data 120. For example, the explanation-based trainer system 124 may select training data 112 with input parameters and/or labels similar to those of the input parameters and/or labels of the test data 114 used by the explainer model to generate bias-cleared model explanation data 120. Consider an example in which the training data 112 indicates images that contain a particular feature, such as a human face. The explanation-based trainer system 124 may select bias-cleared model explanation data 120 generated by the bias-cleared model 108 based on test data 114 that also has samples indicating a human face or similar feature.

In the example of ALGORITHM 1, the explanation-based trainer system 124 updates the weights (*weights*) of the bias-cleared private model 118 based on the utility loss, the explanation loss, and the privacy budget. At the conclusion of the determined number of epochs, the bias-cleared private model 118 may be trained.

ALGORITHM 2 below shows another example way that the training phase 104 may be executed:

ALGORITHM 2

**INPUTS:** Examples {x1, . . . xn}, learning rate ηt, noise scale σ, group size $L$, gradient norm bound $C$, alpha α

**Initialize** $\theta_0$ randomly

**for** t ∈ [T] **do**

Take a random sample $L_t$ with sampling probability L/N

**Compute Loss:**

**For each** i ∈ $L_t$

$E_t$ ← compute − SHAP (model − nonprivate(x$_i$))

$E_c$ ← compute − SHAP (model − private(x$_i$))

$$\mathcal{E}_i \leftarrow \frac{1}{L_t} \sum^{L_t} \frac{|E_t - E_c|}{max(|E_t - E_c|)}$$

$$\mathcal{L}_{tot_i}(\theta_i) \leftarrow \mathcal{L}_{CE_i} + \alpha\mathcal{E}_i$$

**Compute Gradient:**

Compute $g_t(x_i) \leftarrow \nabla_{\theta_t}\mathcal{L}_{tot_i}(\theta, x_i)$

**Clip Gradient:**

$$\overline{g_t}(x_i) \leftarrow \frac{g_t(x_i)}{max(1, \frac{||g_t(x_i)||_2}{C})}$$

**Add noise:**

$$\overline{g_t} \leftarrow \frac{1}{L}\left(\sum_i \overline{g_t}(x_i) + \mathcal{N}(0, \sigma^2 C^2 I)\right)$$

**Descent:**

$$\theta_{t+1} \leftarrow \theta_t - \eta_t\overline{g_t}$$

**end for**

**Output** $\theta_T$ and compute overall privacy cost (ε, δ) using a privacy accounting method

In the example of ALGORITHM 2, the bias-cleared private model 118 is indicated by θ. The explanation-based trainer system 124 executes T training epochs. An initial version of the bias-cleared private model 118 ($\theta_0$) is initialized randomly. For example, values for the weights, coefficients, and/or other parameters of the bias-cleared private model 118 may be randomly selected before the epochs are executed.

For each epoch, the explanation-based trainer system 124 may take a random sample $L_t$ from the training data 112. For each sample $i$ from the random sample of training data, the explanation-based trainer system 124 may find bias-cleared private explanation data 122 ($E_t$) and bias-cleared model explanation data 120 ($Ec$). An explanation loss may be based on the MAE, as described by $\varepsilon_i$. A total loss for the sample $i$ $(\mathcal{L}_{tot})$ may be based on a utility loss $(\mathcal{L}_{CE})$, the explanation loss ($\varepsilon_i$) and a scaling factor α. A gradient for the training epoch may be determined based on the total loss ($g_t(x_i)$). The gradient may be clipped and noise may be added as shown according to a privacy budget to provide differential privacy.

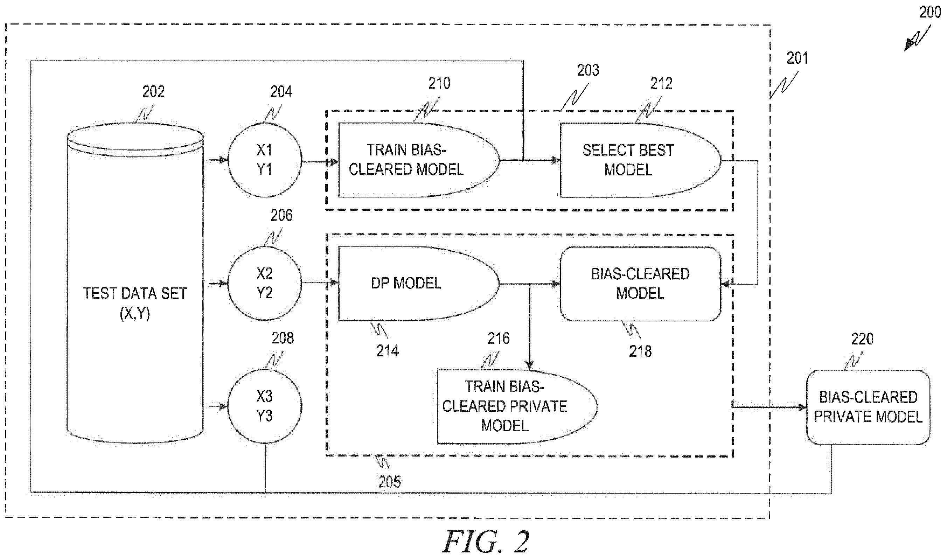

FIG. 2 is a diagram showing one example of an arrangement 200 for training a bias-cleared private model 220. The arrangement 200 includes a computing system 201, which may be similar to the computing system 101 described herein. In the example of FIG. 2, a test data set 202 includes samples describing input parameter values $X$ and corresponding labels $Y$. The computing system 201 may divide the test data set 202 into three subsets 204, 206, 208. The computing system 201 may execute a bootstrap phase 203 to train a bias-cleared model 218 and a training phase 205 to train a bias-cleared private model 220. The test data subsets 204, 206, 208 may be used, as described herein, to train the bias-cleared model 218 and the bias-cleared private model 220.

At the bootstrap phase 203, the computing system 201 may use test data subset 204, at operation 210, to train the bias-cleared model 218, which may be similar to the bias-cleared model 108 of FIG. 1. The computing system 201 may train the bias-cleared model 218, for example, using a SGD method as described herein. In some examples, the operation 210 may generate more than one candidate bias-cleared model. The candidate bias-cleared models, including properties thereof, may be provided to a user, such as the user 132 of FIG. 1. The user may select the best model according to fairness constraints at operation 212. In some examples, the operation 212 may include executing the various candidate fair models using subset 208 of the test data set 202.

At the training phase 205, the computing system 201 may utilize the bias-cleared model 218 and a differential privacy model 214 to execute various training epochs for the bias-cleared private model 220 at operation 216, as described herein. For example, the training phase 205 may utilize test data subset 206. Test data subset 206 may be provided as input to the bias-cleared model 218 and to the bias-cleared private model 220 in one or more batches for each training epoch. An explainer model, such as the explainer model 116, may be used to generate explanation data for the bias-cleared model 218 and for the bias-cleared private model 220 in each training epoch. An explanation loss may be determined for each epoch. The explanation loss, a utility loss, and noise generated by the differential privacy model 214 may be used to update the bias-cleared private model 220 at each epoch, for example, by modifying one or more weights of the bias-cleared private model 220.

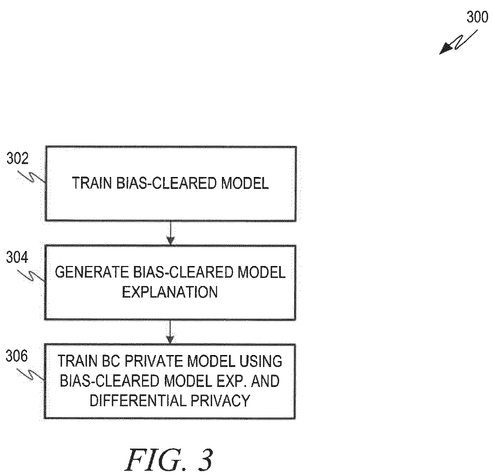

FIG. 3 is a flowchart showing one example of a process flow 300 that may be executed in the environment 100 of FIG. 1 to generate the bias-cleared private model. The process flow 300 may be executed by a computing system, such as the computing system 101 of FIG. 1 and/or the computing system 201 of FIG. 2. At operation 302, the computing system may train a bias-cleared model. The bias-cleared model may be trained according to one or more fairness constraints, as described herein. At operation 304, the computing system may generate bias-cleared model explanation data describing one or more explanations of the bias-cleared model. The bias-cleared model explanation data may be generated using an explainer model, for example, as described herein. At operation 306, the computing system may train the bias-cleared private model using bias-cleared model explanations and random data generated by the differential privacy system 126.

In FIG. 3, the operation 302 may correspond to the bootstrap phase 102, 203 described with respect FIGS. 1 and 2. The operation 306 may correspond to the training phase 104, 205 described with respect to FIGS. 1 and 2. The generating of the bias-cleared model explanations at operation 304 may be a part of the bootstrap phase and/or part of the training phase. In some examples, the explainer model may generate the bias-cleared model explanations based on a response of the bias-cleared model to training data and/or test data. During execution of the operation 306, the computing system may access the bias-cleared model explanations and utilize them, as described herein. In other examples, the explainer model may generate bias-cleared model explanations during the respective epochs of the training phase, for example, as described with respect to ALGORITHM 2 and FIG. 2. Also, in some examples the model explanations can be based on the same training data used to train the bias-cleared private model.

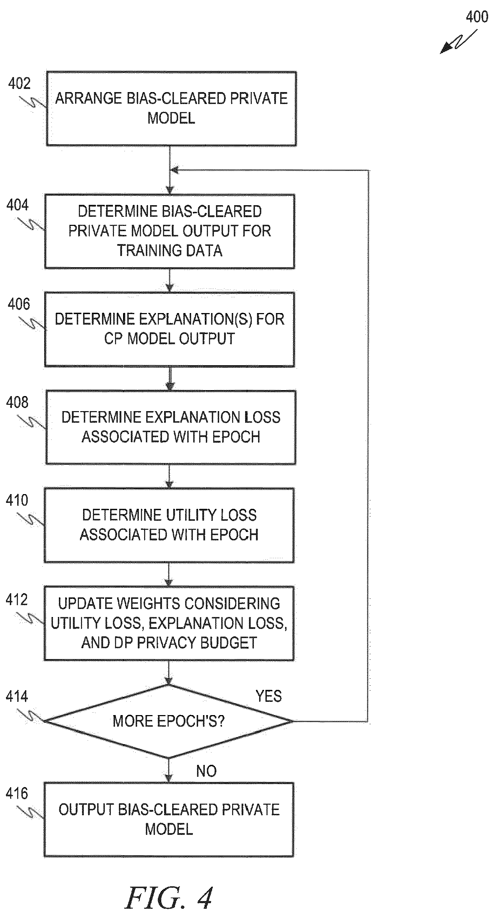

FIG. 4 is a flowchart showing one example of a process flow 400 that may be executed to train a bias-cleared private model. For example, the process flow 400 shows one example manner in which the training phase 104, 205 of the arrangement 200 may be executed. The process flow 400 may be executed at the computing system 101 and/or 201 and, in some examples, may be executed by the explanation-based trainer system 124 of FIG. 1.

At operation 402, the computing system may arrange the bias-cleared private model. This may include, for example, accessing bias-cleared private model structure data describing the structure of the bias-cleared private model. In an example in which the bias-cleared private model is a neural network, the structure data for the bias-cleared private model may include a description of the number of nodes, the number of hidden layers, the number of nodes per layer, and/or the like. The structure of the bias-cleared private model, as described herein, may be equivalent to the structure of the bias-cleared model. In some examples, arranging the bias-cleared private model may also include generating an initial set of values for various weights or other parameters of the bias-cleared private model. The initial set of values for the weights or other parameters may be generated in any suitable manner including, for example, random generation.

At operation 404, the computing system may determine an output of the bias-cleared private model in response to all or a portion of samples from training data for a first epoch. This may include providing the bias-cleared private model with some or all of the labeled samples from the training data. For example, the training data may be provided to the bias-cleared private model in one or more batches, as described herein. The bias-cleared private model may generate output data corresponding to the samples from the training data. At operation 406, the computing system may access explanations for the output of the bias-cleared private model. For example, the computing system may call an explainer model to generate bias-cleared private explanation data based on the bias-cleared private model and/or the outputs of the bias-cleared private model in response to the training data.

At operation 408, the computing system may determine an explanation loss for the bias-cleared private model for the epoch. The explanation loss may describe a difference between the bias-cleared private explanation data for the epoch and corresponding bias-cleared model explanation data. In some examples, the bias-cleared model explanation data used to determine the explanation loss may be selected from bias-cleared model explanation data generated by the explainer model during and/or after the bootstrap phase. The computing system may select bias-cleared model explanation data that corresponds to the bias-cleared private explanation data generated based on the current output the bias-cleared private model. For example, the computing system may select bias-cleared model explanation data generated based on the response of the bias-cleared model to input data similar to the training data used in the current epoch.

At operation 410, the computing system may determine a utility loss for the bias-cleared private model in the epoch. For example, the computing system may compare the output of the bias-cleared private model determined that operation 404 with labeled data indicating the correct or desired output corresponding to the respective samples of the training data. At operation 412, the computing system may update the weights or other parameters of the bias-cleared private model for the epoch considering the utility loss, the explanation loss, and a differential privacy budget. The differential privacy budget may indicate a level of noise to be added, for example, to the gradient or gradients of the bias-cleared private model before determining the updated weights or other model parameters. At operation 414, the computing system may determine whether there are additional training epochs to be executed. If there are additional training epochs to be executed, the computing system may return to operation 404 and repeat operations 404, 406, 408, 410, and 412 for the next training epoch. If all training epochs are complete at operation 414, the computing system may return the bias-cleared private model at operation 416.

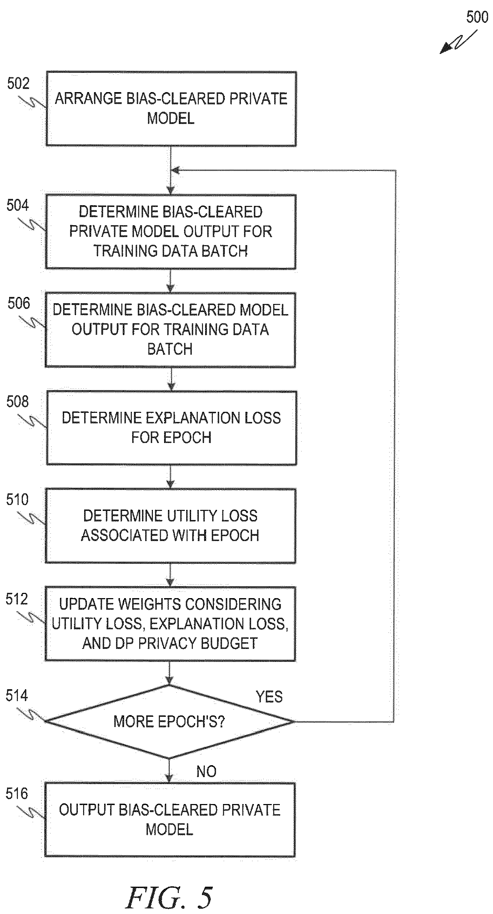

FIG. 5 is a flowchart showing another example of a process flow 500 that may be executed to train a bias-cleared private model. For example, the process flow 500 shows another example manner in which the training phase 104, 205 of the arrangement 200 may be executed. The process flow 500 may be executed at the computing system 101 and/or 201 and, in some examples, may be executed by the explanation-based trainer system 124 of FIG. 1.

At operation 502, the computing system may arrange the bias-cleared private model. This may include, for example, accessing bias-cleared private model structure data describing the structure of the bias-cleared private model. In an example in which the bias-cleared private model is a neural network, the structure data for the bias-cleared private model may include a description of the number of nodes, the number of hidden layers, the number of nodes per layer, and/or the like. The structure of the bias-cleared private model, as described herein, may be equivalent to the structure of the bias-cleared model. In some examples, arranging the bias-cleared private model may also include generating an initial set of values for various weights or other parameters of the bias-cleared private model. The initial set of values for the weights or other parameters may be generated in any suitable manner including, for example, random generation.

At operation 504, the computing system may determine an output of the bias-cleared private model in response to one or more batches of samples from the training data. This may include executing the bias-cleared private model while providing the one or more batches of samples from the training data as input. At operation 506, the computing system may determine an output of the bias-cleared model in response to the samples from the training data used at operation 504. As a result, operations 504 and 506 may provide outputs of the bias-cleared model and bias-cleared private model, respectively, in response to the same batch of samples from the training data.

At operation 508, the computing system may determine an explanation loss for the training epoch. The explanation loss may be based on the output of the bias-cleared model and bias-cleared private model in response to the batch of samples from the training data. In some examples, the computing system may call an explainer model, such as the explainer model 116, to generate bias-cleared model explanation data based on the bias-cleared model and/or the output of the bias-cleared model in response to the batch of samples from the training data. The computing system may also call the explainer model to generate bias-cleared private model explanation data based on the bias-cleared private model and/or the output of the bias-cleared private model in response to the batch of samples from the training data. The explanation loss for the epoch may be based on a comparison of the bias-cleared model explanation data and the bias-cleared private model explanation data.

At operation 510, the computing system may determine a utility loss associated with the training epoch. This may involve comparing the output of the bias-cleared private model for the epoch to label data associated with the batch of samples from the one or more batches of training data that were used for the training epoch. At operation 512, the computing system may update the weights and/or other parameters of the bias-cleared private model considering the utility loss, the explanation loss, and a differential privacy budget, for example as described herein. At operation 514, the computing system may determine whether there are any additional training epochs to be executed. If there are additional training epochs, then the computing system may return to operation 504 to begin executing the next epoch. If all training epoch have been executed, then the computing system may return the bias-cleared private model at operation 516.

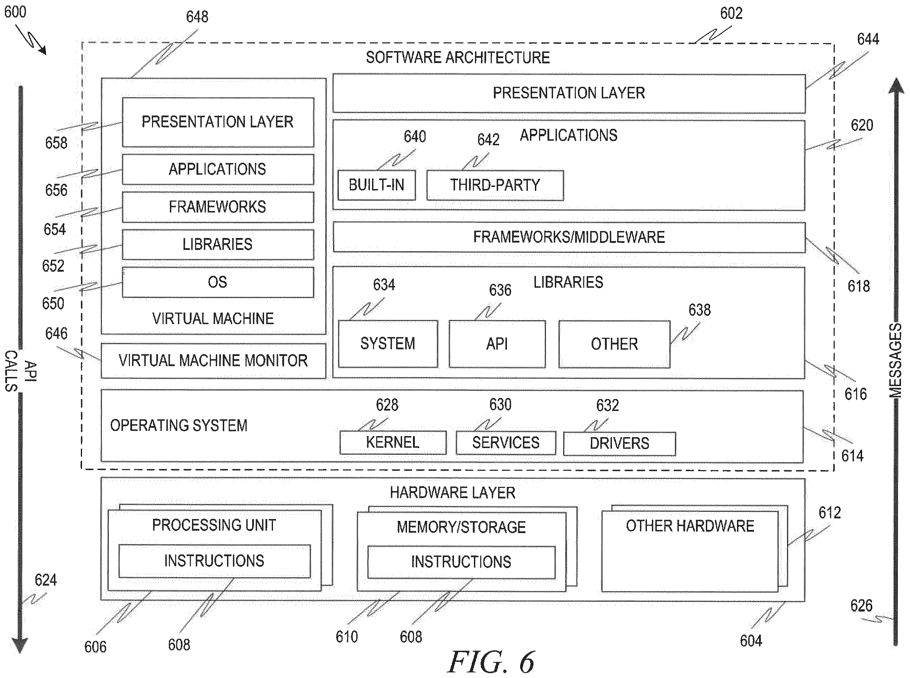

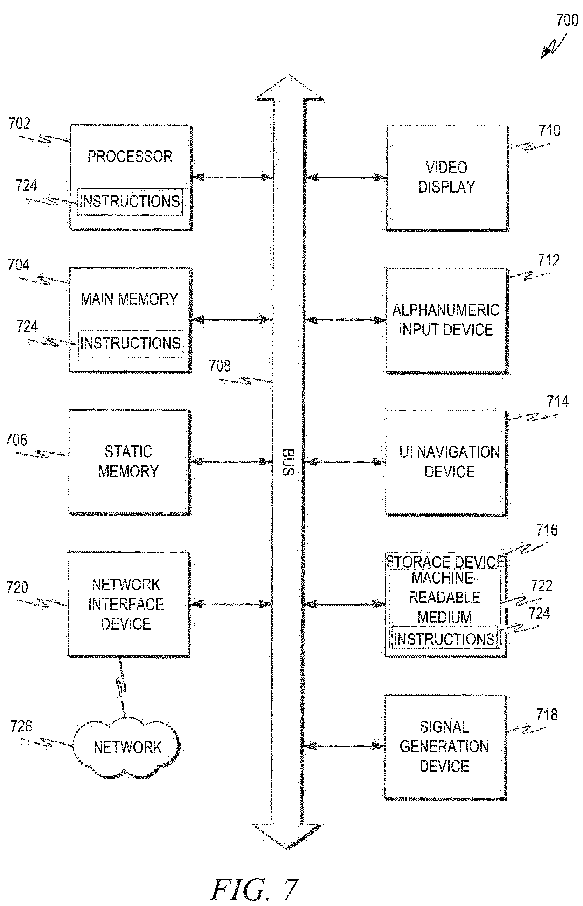

The various techniques described herein may be executing using one or more computing devices such as, for example, the computing devices described by FIGS. 6 and 7. For example, FIGS. 6 and 7 illustrate example configurations of the computing system 101 and the computing system 201 described herein. FIG. 6 is a block diagram 600 showing one example of a software architecture 602 for a computing device. The software architecture 602 may be used in conjunction with various hardware architectures, for example, as described herein. FIG. 6 is merely a non-limiting example of a software architecture and many other architectures may be implemented to facilitate the functionality described herein. An example hardware layer 604 is illustrated and can represent, for example, any of the above referenced computing devices. In some examples, the hardware layer 604 may be implemented according to the architecture of the computer system of FIG. 6.

The hardware layer 604 comprises one or more processing units 606 having associated executable instructions 608. Executable instructions 608 represent the executable instructions of the software architecture 602, including implementation of the methods, modules, subsystems, and components, and so forth described herein and may also include memory and/or storage modules 610, which also have executable instructions 608. Hardware layer 604 may also comprise other hardware as indicated by other hardware 612 which represents any other hardware of the hardware layer 604, such as the other hardware illustrated as part of the software architecture 602.

In the example architecture of FIG. 6, the software architecture 602 may be conceptualized as a stack of layers where each layer provides particular functionality. For example, the software architecture 602 may include layers such as an operating system 614, libraries 616, middleware 618, applications 620 and presentation layer 644. Operationally, the applications 620 and/or other components within the layers may invoke application programming interface (API) calls 624 through the software stack and access a response, returned values, and so forth illustrated as messages 626 in response to the API calls 624. The layers illustrated are representative in nature and not all software architectures have all layers. For example, some mobile or special purpose operating systems may not provide middleware 618, while others may provide such a layer. Other software architectures may include additional or different layers.

The operating system 614 may manage hardware resources and provide common services. The operating system 614 may include, for example, a kernel 628, services 630, and drivers 632. The kernel 628 may act as an abstraction layer between the hardware and the other software layers. For example, the kernel 628 may be responsible for memory management, processor management (e.g., scheduling), component management, networking, security settings, and so on. The services 630 may provide other common services for the other software layers. In some examples, the services 630 include an interrupt service. The interrupt service may detect the receipt of an interrupt and, in response, cause the software architecture 602 to pause its current processing and execute an interrupt service routine (1SR) when an interrupt is accessed.

The drivers 632 may be responsible for controlling or interfacing with the underlying hardware. For instance, the drivers 632 may include display drivers, camera drivers, Bluetooth® drivers, flash memory drivers, serial communication drivers (e.g., Universal Serial Bus (USB) drivers), Wi-Fi® drivers, NFC drivers, audio drivers, power management drivers, and so forth depending on the hardware configuration.

The libraries 616 may provide a common infrastructure that may be utilized by the applications 620 and/or other components and/or layers. The libraries 616 typically provide functionality that allows other software modules to perform tasks in an easier fashion than to interface directly with the operating system 614 functionality (e.g., kernel 628, services 630 and/or drivers 632). The libraries 616 may include system libraries 634 (e.g., C standard library) that may provide functions such as memory allocation functions, string manipulation functions, mathematic functions, and the like. In addition, the libraries 616 may include API libraries 636 such as media libraries (e.g., libraries to support presentation and manipulation of various media format such as MPEG4, H.264, MP3, AAC, AMR, JPG, PNG), graphics libraries (e.g., an OpenGL framework that may be used to render 6D and 3D in a graphic content on a display), database libraries (e.g., SQLite that may provide various relational database functions), web libraries (e.g., WebKit that may provide web browsing functionality), and the like. The libraries 616 may also include a wide variety of other libraries 638, such as machine learning libraries, to provide many other APIs to the applications 620 and other software components/modules.

The middleware 618 (also sometimes referred to as a frameworks layer) may provide a higher-level common infrastructure that may be utilized by the applications 620 and/or other software components/modules. For example, the middleware 618 may provide various graphic user interface (GUI) functions, high-level resource management, high-level location services, and so forth. The middleware 618 may provide a broad spectrum of other APIs that may be utilized by the applications 620 and/or other software components/modules, some of which may be specific to a particular operating system or platform.

The applications 620 include built-in applications 640 and/or third-party applications 642. Examples of representative built-in applications 640 may include, but are not limited to, a contacts application, a browser application, a book reader application, a location application, a media application, a messaging application, and/or a game application. Third-party applications 642 may include any of the built in applications as well as a broad assortment of other applications. In a specific example, the third-party application 642 (e.g., an application developed using the Android™ or iOS™ software development kit (SDK) by an entity other than the vendor of the particular platform) may be mobile software running on a mobile operating system such as iOS™, Android™, Windows® Phone, or other mobile computing device operating systems. In this example, the third-party application 642 may invoke the API calls 624 provided by the mobile operating system such as operating system 614 to facilitate functionality described herein.

The applications 620 may utilize built in operating system functions (e.g., kernel 628, services 630 and/or drivers 632), libraries (e.g., system libraries 634, API libraries 636, and other libraries 638), middleware 618 to create user interfaces to interact with users of the system. Alternatively, or additionally, in some systems interactions with a user may occur through a presentation layer, such as presentation layer 644. In these systems, the application/module "logic" can be separated from the aspects of the application/module that interact with a user.

Some software architectures utilize virtual machines. In the example of FIG. 6, this is illustrated by virtual machine 648. A virtual machine creates a software environment where applications/modules can execute as if they were executing on a hardware computing device. A virtual machine is hosted by a host operating system (operating system 614) and typically, although not always, has a virtual machine monitor 646, which manages the operation of the virtual machine as well as the interface with the host operating system (i.e., operating system 614). A software architecture executes within the virtual machine 648 such as an operating system 650, libraries 652, frameworks / middleware 654, applications 656 and/or presentation layer 658. These layers of software architecture executing within the virtual machine 648 can be the same as corresponding layers previously described or may be different.

MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. In example embodiments, one or more computer systems (e.g., a standalone, client, or server computer system) or one or more hardware processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses that connect the hardware-implemented modules). In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment, or a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

ELECTRONIC APPARATUS AND SYSTEM

Example embodiments may be implemented in digital electronic circuitry, or in computer hardware, firmware, or software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out hardware (e.g., machine) and software architectures that may be deployed, in various example embodiments.

EXAMPLE MACHINE ARCHITECTURE AND MACHINE-READABLE MEDIUM

FIG. 7 is a block diagram of a machine in the example form of a computer system 700 within which instructions 724 may be executed for causing the machine to perform any one or more of the methodologies discussed herein. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processor 702 (e.g., a central processing unit (CPU), a graphics processing unit (GPU), or both), a main memory 704, and a static memory 706, which communicate with each other via a bus 708. The computer system 700 may further include a video display unit 710 (e.g., a liquid crystal display (LCD) or a cathode ray tube (CRT)). The computer system 700 also includes an alphanumeric input device 712 (e.g., a keyboard or a touch-sensitive display screen), a user interface (UI) navigation (or cursor control) device 714 (e.g., a mouse), a disk drive unit 716, a signal generation device 718 (e.g., a speaker), and a network interface device 720.

MACHINE-READABLE MEDIUM

The disk drive unit 716 includes a machine-readable medium 722 thereon is stored one or more sets of data structures and instructions 724 (e.g., software) embodying or utilized by any one or more of the methodologies or functions described herein. The instructions 724 may also reside, completely or at least partially, within the main memory 704 and/or within the processor 702 during execution thereof by the computer system 700, with the main memory 704 and the processor 702 also constituting machine-readable media 722.

While the machine-readable medium 722 is shown in an example embodiment to be a single medium, the term "machine-readable medium" may include a single medium or multiple media (e.g., a centralized or distributed database, and/or associated caches and servers) that store the one or more instructions 724 or data structures. The term "machine-readable medium" shall also be taken to include any tangible medium that is capable of storing, encoding, or carrying instructions 724 for execution by the machine and that cause the machine to perform any one or more of the methodologies of the present disclosure, or that is capable of storing, encoding, or carrying data structures utilized by or associated with such instructions 724. The term "machine-readable medium" shall accordingly be taken to include, but not be limited to, solid-state memories, and optical and magnetic media. Specific examples of machine-readable media 722 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magnetooptical disks; and CD-ROM and DVD-ROM disks. A machine-readable medium is not a transmission medium.

TRANSMISSION MEDIUM

The instructions 724 may further be transmitted or received over a communications network 726 using a transmission medium. The instructions 724 may be transmitted using the network interface device 720 and any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 724 for execution by the machine, and includes digital or analog communications signals or other intangible media to facilitate communication of such software.

Although an embodiment has been described with reference to specific example embodiments, it will be evident that various modifications and changes may be made to these embodiments without departing from the broader spirit and scope of the disclosure. Accordingly, the specification and drawings are to be regarded in an illustrative rather than a restrictive sense. The accompanying drawings that form a part hereof show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

**Claims**

1. A computing system programmed to train a machine learning model, the computing system comprising: at least one processor programmed to perform operations comprising:

   accessing a bias-cleared model, the bias-cleared model being a machine learning model trained according to at least one fairness constraint; and
   executing a first training epoch for a bias-cleared private model, the executing of the first training epoch comprising:

      accessing first bias-cleared private model output data generated by the bias-cleared private model;
      applying an explainer model to first bias-cleared private model output data to generate first bias-cleared private model explanation data;
      accessing first bias-cleared model explanation data describing first bias-cleared model output data generated by the bias-cleared model;
      determining a first explanation loss using the first bias-cleared private model explanation data and the first bias-cleared model explanation data;
      determining first noise data to be added to the bias-cleared private model based at least in part on a privacy budget; and

modifying the bias-cleared private model based at least in part on the first explanation loss and the first noise data.

2. The computing system of claim 1, the operations further comprising accessing model structure data describing a machine learning model structure, the bias-cleared model and the bias-cleared private model being arranged according to the machine learning model structure; and/or

the bias-cleared model comprising a first neural network and the bias-cleared private model comprising a second neural network:

the first neural network comprising a first input layer, a first number of hidden layers, and a first output layer; and

the second neural network comprising a second input layer, the first number of hidden layers, and a second output layer.

3. The computing system of claim 1 or 2, the operations further comprising:

executing the bias-cleared model on a first batch of training data to generate the first bias-cleared model output data; and

the executing of the first training epoch further comprising executing the bias-cleared private model on a second batch of training data to generate the first bias-cleared private model output data, the first batch of training data being different than the second batch of training data.

4. The computing system of claim 3, the operations further comprising selecting the second batch of training data based at least in part on the first batch of training data;

the selecting of the second batch of training data, optionally, comprising comparing first label data describing the first batch of training data and second label data describing the second batch of training data.

5. The computing system of claim 3 or 4, the training of the bias-cleared model being based at least in part on the first batch of training data.

6. The computing system of any one of claims 1 to 5, the operations further comprising determining a utility loss of the bias-cleared private model using the first bias-cleared private model output data.

7. The computing system of any one of claims 1 to 6, the executing of the first training epoch further comprising:

executing the bias-cleared model on a first batch of training data to generate the first bias-cleared model output data; and

executing the bias-cleared private model on the first batch of training data to generate the first bias-cleared private model output data; and/or

the determining of the first explanation loss comprising comparing a target explanation to a difference between the first bias-cleared private model explanation data and the first bias-cleared model explanation data.

8. A computer-implemented method for training a machine learning model, the method comprising:

accessing a bias-cleared model, the bias-cleared model being a machine learning model trained according to at least one fairness constraint: and

executing a first training epoch for a bias-cleared private model, the executing of the first training epoch comprising:

accessing first bias-cleared private model output data generated by the bias-cleared private model;

applying an explainer model to first bias-cleared private model output data to generate first bias-cleared private model explanation data;

accessing first bias-cleared model explanation data describing first bias-cleared model output data generated by the bias-cleared model;

determining a first explanation loss using the first bias-cleared private model explanation data and the first bias-cleared model explanation data;

determining first noise data to be added to the bias-cleared private model based at least in part on a privacy budget; and

modifying the bias-cleared private model based at least in part on the first explanation loss and the first noise data.

9. The method of claim 8, further comprising accessing model structure data describing a machine learning model structure, the bias-cleared model and the bias-cleared private model being arranged according to the machine learning model structure; and/or
the bias-cleared model comprising a first neural network and the bias-cleared private model comprising a second neural network:

the first neural network comprising a first input layer, a first number of hidden layers, and a first output layer; and
the second neural network comprising a second input layer, the first number of hidden layers, and a second output layer.

10. The method of claim 8 or 9, further comprising:

executing the bias-cleared model on a first batch of training data to generate the first bias-cleared model output data; and
the executing of the first training epoch further comprising executing the bias-cleared private model on a second batch of training data to generate the first bias-cleared private model output data, the first batch of training data being different than the second batch of training data.

11. The method of claim 10, further comprising selecting the second batch of training data based at least in part on the first batch of training data;
the selecting of the second batch of training data, optionally, comprising comparing first label data describing the first batch of training data and second label data describing the second batch of training data.

12. The method of claim 10 or 11, the training of the bias-cleared model being based at least in part on the first batch of training data.

13. The method of any one of claims 8 to 12, further comprising determining a utility loss of the bias-cleared private model using the first bias-cleared private model output data.

14. The method of any one of claims 8 to 13, the executing of the first training epoch further comprising:

executing the bias-cleared model on a first batch of training data to generate the first bias-cleared model output data; and
executing the bias-cleared private model on the first batch of training data to generate the first bias-cleared private model output data.

15. A machine-readable medium comprising instructions thereon that, when executed by at least one processor, cause the at least one processor to perform the computer-implemented method for training a machine learning model of any one of claims 8 to 14.

FIG. 1

FIG. 2

EP 4 325 396 A1

300

302 TRAIN BIAS-CLEARED MODEL

304 GENERATE BIAS-CLEARED MODEL
EXPLANATION

306 TRAIN BC PRIVATE MODEL USING
BIAS-CLEARED MODEL EXP. AND
DIFFERENTIAL PRIVACY

*FIG. 3*

400

402 ARRANGE BIAS-CLEARED PRIVATE MODEL

404 DETERMINE BIAS-CLEARED PRIVATE MODEL OUTPUT FOR TRAINING DATA

406 DETERMINE EXPLANATION(S) FOR CP MODEL OUTPUT

408 DETERMINE EXPLANATION LOSS ASSOCIATED WITH EPOCH

410 DETERMINE UTILITY LOSS ASSOCIATED WITH EPOCH

412 UPDATE WEIGHTS CONSIDERING UTILITY LOSS, EXPLANATION LOSS, AND DP PRIVACY BUDGET

414 MORE EPOCH'S? — YES

NO

416 OUTPUT BIAS-CLEARED PRIVATE MODEL

*FIG. 4*

500

502 — ARRANGE BIAS-CLEARED PRIVATE MODEL

504 — DETERMINE BIAS-CLEARED PRIVATE MODEL OUTPUT FOR TRAINING DATA BATCH

506 — DETERMINE BIAS-CLEARED MODEL OUTPUT FOR TRAINING DATA BATCH

508 — DETERMINE EXPLANATION LOSS FOR EPOCH

510 — DETERMINE UTILITY LOSS ASSOCIATED WITH EPOCH

512 — UPDATE WEIGHTS CONSIDERING UTILITY LOSS, EXPLANATION LOSS, AND DP PRIVACY BUDGET

514 — MORE EPOCH'S?    YES

NO

516 — OUTPUT BIAS-CLEARED PRIVATE MODEL

*FIG. 5*

*FIG. 6*

700

702 PROCESSOR

724 INSTRUCTIONS

704 MAIN MEMORY

724 INSTRUCTIONS

708

706 STATIC MEMORY

720 NETWORK INTERFACE DEVICE

726 NETWORK

BUS

710 VIDEO DISPLAY

712 ALPHANUMERIC INPUT DEVICE

714 UI NAVIGATION DEVICE

716 STORAGE DEVICE
MACHINE-READABLE MEDIUM
722
724 INSTRUCTIONS

718 SIGNAL GENERATION DEVICE

*FIG. 7*

**EUROPEAN SEARCH REPORT**

Europäisches Patentamt
European Patent Office
Office européen des brevets

Application Number

EP 23 19 0301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FREDERIK HARDER ET AL: "Interpretable and Differentially Private Predictions", ARXIV.ORG, CORNELL UNIVERSITY LIBRARY, 201 OLIN LIBRARY CORNELL UNIVERSITY ITHACA, NY 14853, 5 June 2019 (2019-06-05), XP081636271, * abstract; figures 1-4, 8-9 * * sections 1-6 * | 1-15 | INV. G06N3/045 G06N3/096 ADD. G06N3/09 G06N20/10 G06N20/20 |
| A | RUI WANG ET AL: "Shapley Explanation Networks", ARXIV.ORG, CORNELL UNIVERSITY LIBRARY, 201 OLIN LIBRARY CORNELL UNIVERSITY ITHACA, NY 14853, 6 April 2021 (2021-04-06), XP081933170, * the whole document * | 1-15 | |
| A | HICKEY JAMES M ET AL: "Fairness by Explicability and Adversarial SHAP Learning", 25 February 2021 (2021-02-25), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 174 – 190, XP047589342, * the whole document * | 1-15 | |
| A | VASISHT DUDDU ET AL: "SHAPr: An Efficient and Versatile Membership Privacy Risk Metric for Machine Learning", ARXIV.ORG, CORNELL UNIVERSITY LIBRARY, 201 OLIN LIBRARY CORNELL UNIVERSITY ITHACA, NY 14853, 4 December 2021 (2021-12-04), XP091113768, * the whole document * | 1-15 | |

TECHNICAL FIELDS SEARCHED (IPC)

G06N

-/--

The present search report has been drawn up for all claims

| Place of search | Date of completion of the search | Examiner |
|---|---|---|
| The Hague | 3 January 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 23 19 0301

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BRIHI JOSHI ET AL: "ER-TEST: Evaluating Explanation Regularization Methods for NLP Models", ARXIV.ORG, CORNELL UNIVERSITY LIBRARY, 201 OLIN LIBRARY CORNELL UNIVERSITY ITHACA, NY 14853, 25 May 2022 (2022-05-25), XP091232761, * the whole document * | 1-15 | |

TECHNICAL FIELDS
SEARCHED     (IPC)

The present search report has been drawn up for all claims

| Place of search | Date of completion of the search | Examiner |
|---|---|---|
| The Hague | 3 January 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

**Patent documents cited in the description**

- US 63397685